(19) **Europäisches Patentamt**
**European Patent Office**
**Office européen des brevets**

(11) **EP 3 193 250 A1**

(12) **EUROPEAN PATENT APPLICATION**

(43) Date of publication:
**19.07.2017 Bulletin 2017/29**

(51) Int Cl.:
***G06F 7/58*** (2006.01)

(21) Application number: **16151062.3**

(22) Date of filing: **13.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Bayer Technology Services GmbH 51368 Leverkusen (DE)**

(72) Inventors:
- **von zur Gathen, Joachim**
  **53179 Bonn (DE)**
- **Mogk, Georg**
  **51515 Bechen (DE)**
- **Artlich, Stefan**
  **51371 Leverkusen (DE)**

(74) Representative: **BIP Patents**
**c/o Bayer Intellectual Property GmbH**
**Alfred-Nobel-Straße 10**
**40789 Monheim am Rhein (DE)**

(54) **RANDOM NUMBER BASED COMPUTER IMPLEMENTED SOLUTION FOR RELIABLE IDENTIFICATION OF GOODS**

(57) Object of the application is a random number based computer implemented solution for reliable identification of goods in particular a computer implemented method, a computer program and software for the generation of unique randomized serial numbers to respective consecutive indexes for the reliable identification of goods.

Fig. 1

Description

Object of the application is a random number based computer implemented solution for reliable identification of goods in particular a computer implemented method, a computer program and software for the generation of unique randomized serial numbers to respective consecutive indexes for the reliable identification of goods.

Industries such as the pharmaceutical and the agrochemical industry are increasingly faced with counterfeit products that are introduced into the legal supply chain. In order to detect these counterfeit products, a point-of-dispense verification concepts currently evolves that consists of (1) the marking of each individual sales item with a unique random serial number, (2) the entry of each random serial number that has been used into a verification repository, and (3) the verification of the item at the point-of-dispense through a query to the repository whether the serial number on hand has ever been used in production and the subsequent marking of the serial number as 'dispensed/distributed' in the repository.

Also the software industry is increasingly faced with counterfeit products and needs a unique identifier per license sold, wherein guessing of a valid license code is prevented. Last but not least also promotional codes require no doubling and no guessing of win codes for reliable awarding of customers.

In order to not negatively impact production throughput and to optimally use the rare space on the sales item packaging, the serial numbers should be quickly generated and as short as possible.

A simple trial-and-error method using a standard random number generator (where the next serial number is diced and thrown away if it already occurred) cannot be used since the effort to find the next random number considerably increases if the number range is already almost exploited.

Traceability is so important for the pharmaceutical industry that the European Federation of Pharmaceutical Industries and Associations (EFPIA) released a European Pack Coding Guideline defining the requirements standards for coding systems (http://www.efpia.eu/uploads/images/EFPIA%20European%20Pack%20Coding%20Guideline%20 V3 6%20%28Final%29.pdf) which can be summarized as following:

- Derived from GS1 standards using Data Matrix ECC200 code
- Manufacturer Product Code (GTIN or NTIN) 14 digits
- Expiry Date 6 digits (YYMMDD)
- Batch Number up to 20 alpha-numeric characters
- Unique Serial Number (randomized) up to 20 alpha-numeric characters

Minimum requirements on quality of randomization of the Unique Serial Number are:

- Probability to guess valid serial number should be less than 1:10.000,
- Serials should be equally distributed across number range,
- Serials should be independent,
- Serials should not be built using an algorithm that is easy to find out when knowing the given set of serials or a subset thereof

The state of the art has developed several methods for the generation of random numbers which are usually divided in physical method based on the introduction of entropy and computational method using an algorithm. Several algorithms were developed as well as statistical test for randomness to measure the predictability of the results.

However generating a large number of unique sufficiently random numbers usually requires a lot of work and time.

In most methods a serial number is generated and stored, and the novelty of later generated numbers must be checked by comparison; novelty check of each generated number is time and computational energy consuming when the quantity of stored number is growing.

There was therefore a need for a solution for the efficient provision of a sequence of unique serial numbers in a short time that fulfills the above mentioned randomization criteria in a predefined number space and allows exhaustion of the full number space. Efficiency means that software based on this method should produce at least 1000 serial numbers per second in the long run, when executed on a standard laptop.

The solution should fulfill the following algorithmic requirements A:

- A1 - The solution should map the consecutive index 1, 2, ..., N to the codomain {1, 2, ..., N} in a way that each value in the codomain occurs once and only once (bijectivity) and the growing set shall look like random sets of the same size in the predefined number space.
- A2 - The maximum index N should be selectable between $N = 10**8$ and $N = 2**63 = 9.223.372.036.853.775.808 \sim 9,223 * 10**18$.
- A3 - The solution should use a starting index $n0$ and consecutive indexes $n0+1$, $n0+2$, etc. to generate the serial numbers and allow the correlation between a package number / index and the generated serial number.
- A4 - The generated serial numbers should randomly occur in the predefined number space i.e. if taken a sufficiently large subsequence of generated serial numbers, these numbers should be equally distributed across the entire number range.
- A5 - The generated serial numbers should be independent.
- A6 - From the knowledge of a sequence of serial numbers, it should not be possible to determine the next serial number(s) that the software will generate.

- A7 - The solution should be parametrizable with an at least 128-bit key parameter to ensure that the sequence of generated serials differs for two different parameterizations.
- A8 - The solution should be performant, i.e. more than 1.000 serials should be generated within 1 second on a standard laptop (3 GB RAM, 2 GHz processor).T
- A9 - The solution should be based on current state-of-the-art standards approved by governmental organizations responsible for cryptographic standards.
- A10 - From the knowledge of an arbitrary number of consecutive indices and the related generated serial numbers, it should not be possible to reason the 128-bit key parameter.

The above mentioned requirements shall be either:

- testable, which means that the fulfilment of a requirement will be verified by means of a test, testable requirements are A4, A5, A8. or
- verifiable, which means that the fulfillment of a requirement will be verified by means of documented evidence referring to e.g. the supplier documentation. Verifiable requirements are A1, A2, A6, A7, A9, A10.

The above mentioned problem was solved by a computer implemented method, a computer program and software for the generation of unique random serial numbers r from indexes n comprising the following steps:

a) Choosing a base b for representation of the indexes n and / or the random serial numbers r to be generated. Preferred values of base b are b=2 (dual system) and b=10 (decimal system)

b) Inputting a list of indexes n optionally represented in base b of a predefined length k, preferred a starting index n0, a consecutive index n0+1, n0+2 and a maximum index N,

c) Inputting of a user identification key K in a user interface, preferably a 128-bit string,

d) Transferring the input of a), b) and c) into a random number generating module, then

e) in the random number generating module the (starting) index of d) is split into a component $A_0$ of length 1 and a component Bo of length k-1, wherein preferably k-1= 1 if k is even and k-1=1+1 otherwise, then

f) in the random number generating module a first randomization round yields the next state $A_1|B_1$ as

$$C_1 \leftarrow A_0 \oplus f_K(1,B_0),$$

$$A_1 \leftarrow B_0,$$

$$B_1 \leftarrow C_1,$$

where $\oplus$ denotes an addition followed by modulo $b^1$ with b of a) and 1 of e) and $f_K$ is a cryptographic function described below using the user identification key K of c), then

g) in the random number generating module randomization continues similarly through a certain number R of randomization rounds. Until i=R, passing the value
of $B_{i-1}$ unchanged into A;, and computing

$$C_i \leftarrow A_i{-}1 \oplus f_K(i,B_{i-1}),$$

until a final $C_R$ is generated, then
h) optionally the final $C_R$ is truncated at a predefined format, then
i) optionally the final $C_R$ of g) or the final truncated $C_R$ of h) is transferred into a converting module and conversion into the randomized serial number ro in a predefined underlying alphabet using a conversion algorithm, then
j) step e) to i) are conducted for the next index,
k) transferring the combination of the indexes n with their respective random serial numbers r in a database module for storage and / or transfer of the random serial numbers r to a printer for printing and / or output of the random serial numbers on a user interface.

Indexes n may be inputted directly as representations in base b or may be converted into their representations in base b) in a conversion module before transfer of step d).

In a particular embodiment of the method also the user identification key is converted into its representation in base b.

The cryptographic function $f_K(i,B)$, in step f) and g) is a function derived from an arbitrary block cipher function F with block size J and $J>log_2(b^{k-l})-ceil(log_2(R))$ (with k-1 from step e) and b from step a) R from step i); the function *ceil* denotes rounding up on next greater integer and $log_2$ denotes the logarithms on base 2). As block cipher function the AES-128 is recommended ( http://csrc.nist.gov/publications/fips/fips197/fips-197.pdf), but any other block cipher function F fulfilling the following criteria can be used: F(K,x)=y maps a block x on a block y with $x,y \in \{0,1\}^J$ with a block size J, considering the customer key K (e.g. for AES-128 the block size J =128 and the key K has the length of 128 bit). Furthermore there exist $F^{-1}$ with $F^{-1}(K,y)=x$.

For constructing the cryptographic function $f_K(i,B_{i-1})$ we need the a binary representation of $B_{i-1}$. We denote the binary representation of $B_{i-1}$ with $^{(2)}B_{i-1}$ it has a bit lenght of $q_B:=ceil(log_2(b^{k-l}))<J$. If necessary zeros have to be attached to $^{(2)}B_{i-1}$ so long as it has the length $q_b$. We denote with $q_R:=ceil(log_2(R))$ the bit length of R and with $^{(2)}i$ we denote binary repression of i from step g) with bit length $q_R$. Now we create a new binary block $^{(2)}H$ with length $q_H:=J-q_B-q_R$ bits. $^{(2)}H$ could be chosen constant like $^{(2)}H=(111....11)$ or $^{(2)}H$ can be create with avilible product information like batch number or expiry date. The way how to create $^{(2)}H$ is not important, it is important that the construction of $^{(2)}H$ is repeatable. It is recommended to create $^{(2)}H$ from available product information. Now we assemble the binary blocks $^{(2)}H$, $^{(2)}i,^{(2)}B_{i-1}$ to one common block with bit length $J= q_H+ q_B +q_R$ denoted by $(^{(2)}H, \ ^{(2)}i,^{(2)}B_{i-1})$. Set $y=F(K, \ (^{(2)}H, ^{(2)}i,^{(2)}B_{i-1})) \in\{0,1\}^J$. Let us denote with $|_{k-1}$ the last k-1 binary digest of a block. Finally we define the cryptographic function $f_K(i,B_{i-1}):=y|_{k-1}=F(K, (^{(2)}H, ^{(2)}i,^{(2)}B_{i-1}))|_{k-1}$

Predefined index length k is typically $16\leq k\leq1024$, preferred $27\leq k\leq64$. In case the indexes are shorter than the predefined length k they are usually completed with zeroes until predefined length is achieved.

Order of steps a), b) and c) may be changed.

Step k) can be also conducted before next index is treated as mentioned in step j).

In step i) the conversion algorithm typically converts the randomized serial number r in base b into a randomized serial number in the predefined underlying alphabet. This alphabet can be purely numeric or alphanumeric; in case of alphanumeric serial numbers the characters that are to be used are predefined as well as their particular representations in base b.

Choosing or inputing of steps a), b) and c), truncation format for step h) and / or predefined underlying alphabet for conversion of step i) are typically also made in the user interface. Indexes n may also be provided by an external database and be inputted via a machine interface.

Although the invention would allow generation of longer serials a maximal length ≤ 20 characters (truncation format of h) is preferred to conform to applicable GS1 coding standards in the industry.

A preferred embodiment of the above mentioned method is to convert the indexes and optionally the user identification key into their binary representations leading to a method comprising the following sequence of steps:

a) Inputting a list of indexes in binary representation and of a predefined length k, preferred a starting index n0, a consecutive index n0+1, n0+2 and a maximum index N"

b) Inputting a user identification key K, preferred a 128-bit string.

c) Transferring the input of a) into a converting module connected to the key user interface and conversion of the starting and consecutive indexes into their binary representations of a length *kn* using a conversion algorithm,

d) Optionally transferring the input of b) into a converting module connected to the key user interface and conversion of the user identification key into its binary representation of a predefined length *kk* using a conversion algorithm,

e) Transferring the binary representation of c) and the user identification key of b) alternatively its binary representation of d) into a random number generating module connected to the converting module,

f) in the random number generating module the binary representation of the starting index of c) is split into a component $A_0$ of length l and a component Bo of length k-1, wherein preferably k-1 = l if k is even and k-1=1+1 otherwise, then

g) in the random number generating module a first randomization round yields the next state $A_1|B_1$ as

$$C_1 \leftarrow A_0 \oplus f_K(1,B_0),$$

$$A_1 \leftarrow B_0,$$

$$B_1 \leftarrow C_1,$$

where $\oplus$ denotes an addition followed by modulo $2^1$ with l of f) and $f_K$ is a cryptographic function using the user identification key K of b) or its binary representation of d),

h) in the random number generating module randomization continues similarly through a certain number of randomization rounds R. Until i=R, passing the value of $B_{i-1}$ unchanged into $A_i$, and computing

$$C_i \leftarrow A_i-1 \oplus f_K(i,Bi-1),$$

until a final binary $C_R$ is generated,

i) Optionally the final binary $C_R$ is truncated at the desired format,

j) Optionally transferring of the final binary $C_R$ into the converting module and conversion into the randomized serial number rousing the conversion algorithm,

k) step f) to j) are conducted for the consecutive indexes n0+1, n0+2, etc

l) transfer of the combination of the starting and consecutive indexes $n_0$, n0+1, n0+2,... with their respective random serial numbers ro, r0+1, r0+2 in a database module for storage and / or transfer of the random serial numbers r to a printer for printing and / or output of the random serial number on a user interface.

The user identification key is typically chosen uniformly at random from 128-bit strings, which can comprise any signs, letters and numbers from 0 to 9.

Typically the starting and consecutive indexes are converted into their binary representations of a length $20 \leq kn \leq 100$, preferred $27 \leq kn \leq 64$, most preferred is kn=32.

Typically the cryptographic function is derived from the publicly available cryptographically secure pseudorandom number generator AES (Advanced Encryption Standard) with the user identification key. Typically the user identification key is converted into its binary representation of a length kk=128 which is commonly used in cryptographic function.

It is preferred that the cryptographic function relies on the Feistel structure, AES, and their combination in the Luby-Rackoff method (MICHAEL LUBY & CHARLES RACKOFF (1988). How to Construct Pseudorandom Permutations from Pseudorandom Functions. SIAM Journal on Computing 17(2), 373-386),

A number of randomization rounds $6 \leq R \leq 20$, preferred $10 \leq R \leq 16$, typically 14 is preferred to achieve at least 128 bits of entropy inside the algorithm.

In cases where shorter user identification key is to be used the number of randomization rounds many have to be modified.

The method of the invention allows use of other cryptographic functions, whereas most secured are preferred.

Randomization efficacy was tested using the US National Institute of Standards and Technology) test suite as standard for testing whether a given bit sequence is random (ANDREW RUKHIN, JUAN SOTO, JAMES NECHVATAL, MILES SMID, ELAINE BARKER, STEFAN LEIGH, MARK LEVENSON, MARK VANGEL, DAVID BANKS, ALAN HECKERT, JAMES DRAY & SAN VO (2010). A Statistical Test Suite for Random and Pseudorandom Number Generators for Cryptographic Applications. U.S. Department of Commerce / National Institute of Standards and Technology. URL http://csrc.nist.gov/groups/ST/toolkit/rng/documents/SP 800-22rev1a.pdf ) and found fulfill the requirements mentioned above.

Use of the pseudo-random permutation of steps f) and g) [respectively g) and h) in the alternative embodiment] was found to considerably increase randomization efficacy and allow optimal use of number space.

In the pharmaceutical industry the starting index and the consecutive indexes are typically the package indexes or Manufacturer Product Code.

Typically the final $C_R$ is truncated to a predefined length typically from 10 to 500.

The major advantages of the invention are:

- By construction, every number occurs exactly once
- By construction, pre-defined number range is fully exhausted leading to space saving on packages,
- For a pre-defined number space the solution of the invention generates the randomized serial numbers in a single loop, wherein loop is defined by a selection typically made out of $10^{13}$ parameter sets,
- Even if one would know the algorithm, more than 3 subsequent (!) numbers and many years of calculation on a high-end computer would be necessary to find the selected parameter set,
- The next unique randomized serial number is generated in almost no time (<< 1msec per number on a standard PC). The method of the present invention allows the generation of 30.000 unique randomized serial numbers per second using a standard computer without decrease in performance with increasing number of serials already generated because no database is used for control of availability of the generated number.
- The method and system cannot be cracked within reasonable time frame, as

    o Parameterization occurs upon customer's discretion - therefore marketable with no security risk for the different customers ,
    o Number of digits i.e. length of serials is selectable, alphanumeric serials may also be used,
    o The serial number pattern does not suggest an easy-to-crack generation,
    o The method, computer program and software of the invention uses only basic arithmetic operations, thus no specific hardware and software requirements apply.

The method or computer program of the invention is preferably implemented as separate module for example in Java and the generated numbers are passed to calling application for storing in the database module. As an example for storage and use in SAP, the commercially available SAP Java Connector (JCo server) is used to integrate the number generator in the system landscape.

The method and system can be used as standalone, ready-to-use anti-counterfeiting solution or in combination with other Track, Trace & Authentication system and computer-implemented method.

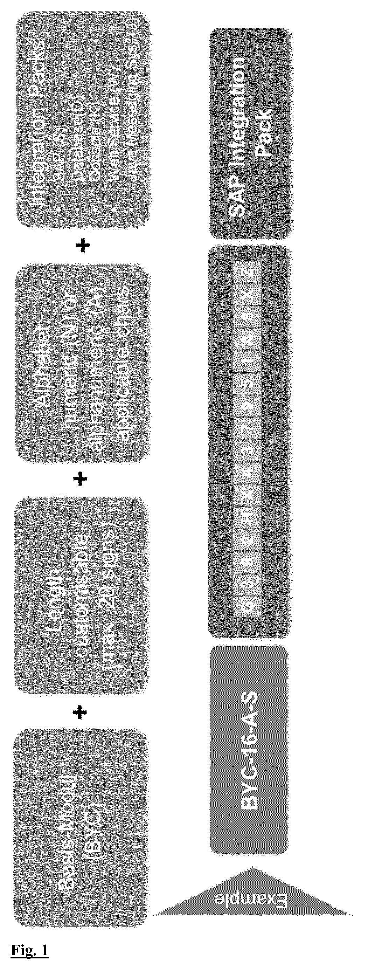

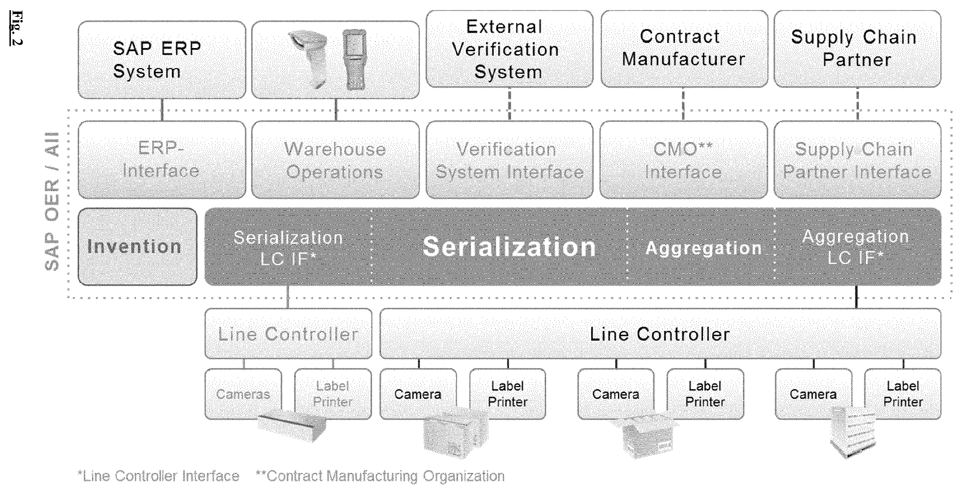

Such an integration landscape is shown on Fig. 1 and 2 as an example without being limited thereto.

Figure 1 shows the different modules of a system for running the computer implemented method of the invention: The core component of the system is the 'Basis Module (BYC)' processing the computer implemented method for the generation of unique random serial numbers as described in Claim 1. Using this Basis Module the user can choose the maximum length of the serial numbers that are to be generated. Although the invention would allow generation of longer serials a maximal length ≤ 20 characters is preferred to conform to applicable GS1 coding standards in the industry. User can also choose the underlying alphabet for the serial numbers (purely numeric or alphanumeric), and in case of alphanumeric serial numbers the characters that are to be used.
Finally the system can be embedded into a stand-alone console application or integrated with other applications such as SAP, data bases and using e.g. web services or Java messaging system

Figure 2 shows an example for the overall integration of the invention into or corporate IT systems landscape. The key system shown in the middle of the figure is SAP ® OER / AII with its different modules for serialization and aggregation and its interface to the system of the invention to furnish SAP OER/AII with random serial numbers. Additional interfaces of SAP OER/AII shown in the figure are the ones to ERP (Enterprise Resource Planning), to Warehouse Operations, to External Verification Systems operated e.g. by authorities, to Contract Manufacturers, and to other supply chain partners. At the bottom the figure shows the serialization and aggregation interfaces of SAP OER / AII to the line controller level. The line controllers control the actual printing of the serial numbers at the packaging lines using e.g. label printers.

The unique random serial number generated according to the present application is typically used only once to mark a product that is to be protected against fake. Typical products are pharmaceuticals packages.

Typically in the pharmaceutical industry the database module would also record the Manufacturer Product Code (GTIN or NTIN) of 14 digits (typically used as index), the Expiry Date of 6 digits (YYMMDD), the Batch Number of up to 20 alpha-numeric characters and the r Serial Number (randomized serial number) of up to 20 alpha-numeric characters as well as a distribution status for each Unique Serial Number.

For detection of fake the serial number is typically introduced in a computer-implemented method, comprising the following steps:

a) Input of the serial number in an user interface connected with a database comprising a list of the generated randomized serial numbers and for each randomized serial number a distribution status, and preferred the corresponding indexes,
b) Automatic search in the database for the record matching the serial number of a),
c) In case the serial number is found, automatic check of the distribution status of the record,
d) In case the serial number has not been distributed yet, then marking the record as distributed, alternatively
e) In case the serial number is already marked as distributed or the serial number is not found,
f) Marking of the record and output of a warning signal on the user interface.

**Claims**

1. A computer implemented method for the generation of unique random serial numbers r from indexes n comprising the following steps:

a) Choosing a base b for representation of the indexes n and the random serial numbers r to be generated.
b) Inputting a list of indexes n of a predefined length k,
c) Inputting of a user identification key K, preferred a 128-bit string, in a user interface,
d) Transferring the input of a), b) and c) into a random number generating module connected to the converting module, then
e) In the random number generating module one of the index no of b) is split into a component $A_0$ of length l and a component $B_0$ of length k-1, wherein preferably k-l = l if k is even and k-1=1+1 otherwise, then
f) In the random number generating module a first randomization round yields the next state $A_1|B_1$ as

$$C_1 \leftarrow A_0 \oplus f_K(1, B_0),$$

$$A_1 \leftarrow B_0,$$

$$B_1 \leftarrow C_1,$$

where $\oplus$ denotes an addition followed by modulo $b^1$ with b of a) and l of e) and $f_K$ is a cryptographic function using the user identification key K of c), then
g) In the random number generating module randomization continues similarly through a certain number R of randomization rounds until i=R, passing the value of $B_{i-1}$ unchanged into $A_i$, and computing

$$C_i \leftarrow A_i - 1 \oplus f_K(i, B_{i-1}),$$

until a final $C_R$ is generated, then
h) Optionally the final $C_R$ is truncated at a predefined format,
i) Optionally transferring the final $C_R$ of g) or the final truncated $C_R$ of h) into a converting module and conversion into the randomized serial number ro in a predefined underlying alphabet using a conversion algorithm,

j) Step e) to g) are conducted for the next index,
k) Transferring of the combination of the indexes n with their respective random serial numbers r in a database module for storage and / or transfer of the random serial numbers r to a printer for printing and / or output of the random serial number on a user interface.

2. The computer implemented method according to claim 1, wherein the inputted indexes are a starting index $n_0$, a consecutive index $n_0+1$, $n_0+2$ and a maximum index N.

3. The computer implemented method according to one of the claims 1 or 2, wherein the indexes and optionally user identification key are binarized in a conversion module before transfer of step d).

4. The computer implemented method according to claim 1 to 3 wherein the user identification key in the user interface is a 128-bit string and the number of randomization rounds in step f) is $6 \leq r \leq 20$.

5. A computer program having instructions adapted to carry the method according to one of the claims 1 to 4.

6. A computer program product comprising the computer program according to one of the claims 1 to 4.

7. Software for conducting the method according to one of the claims 1 to 4.

**Integration Packs**
- SAP (S)
- Database (D)
- Console (K)
- Web Service (W)
- Java Messaging Sys. (J)

**+**

**Alphabet:**
numeric (N) or
alphanumeric (A),
applicable chars

**+**

**Length**
customisable
(max. 20 signs)

**+**

**Basis-Modul**
**(BYC)**

**SAP Integration**
**Pack**

| G | 3 | 9 | 2 | H | X | 4 | 3 | 7 | 9 | 5 | 1 | A | 8 | X | Z |
|---|---|---|---|---|---|---|---|---|---|---|---|---|---|---|---|

**BYC-16-A-S**

Example

**Fig. 1**

**Fig. 2**

Europäisches
Patentamt

European
Patent Office

Office européen
des brevets

# EUROPEAN SEARCH REPORT

Application Number

EP 16 15 1062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | David Ireland ET AL: "Encrypting credit card numbers using Feistel Finite Set Encryption Mode (FFSEM)", <br><br>13 October 2015 (2015-10-13), XP055283791, Retrieved from the Internet: URL:https://web.archive.org/web/2015101316 5613/http://www.di-mgt.com.au/crypto-ffsem .html [retrieved on 2016-06-27] * section "Format Preserving Encryption" section "Feistel Network" section "The encryption algorithm E(k,.)" * <br><br>----- | 1-7 | INV. G06F7/58 |
| X | Terence Spies: "Feistel Finite Set Encryption Mode", <br><br>6 February 2008 (2008-02-06), XP055283452, Retrieved from the Internet: URL:http://csrc.nist.gov/groups/ST/toolkit /BCM/documents/proposedmodes/ffsem/ffsem-s pec.pdf [retrieved on 2016-06-24] * sections 3.2, 3.3, 5.2 * <br><br>----- | 1-7 | |
| X | Phillip Rogaway: "A Synopsis of Format-Preserving Encryption", <br><br>27 March 2010 (2010-03-27), XP055195986, Retrieved from the Internet: URL:http://citeseerx.ist.psu.edu/viewdoc/d ownload;jsessionid=E386B44A2530D5A50C01B39 CD7338BF2?doi=10.1.1.299.769&rep=rep1&type =pdf [retrieved on 2015-06-16] * section 3 * <br><br>----- <br><br>-/-- | 1-7 | |

TECHNICAL FIELDS
SEARCHED (IPC)

G06F

The present search report has been drawn up for all claims

| Place of search | Date of completion of the search | Examiner |
|---|---|---|
| Munich | 27 June 2016 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 15 1062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIHIR BELLARE ET AL: "Format-Preserving Encryption", 13 August 2009 (2009-08-13), SELECTED AREAS IN CRYPTOGRAPHY, SPRINGER BERLIN HEIDELBERG, BERLIN, HEIDELBERG, PAGE(S) 295 - 312, XP019133919, ISBN: 978-3-642-05443-3 * section 6 * | 1-7 | |
| X | Eric Brier ET AL: "BPS: a Format-Preserving Encryption Proposal", , 1 January 2010 (2010-01-01), XP055283769, Retrieved from the Internet: URL:http://csrc.nist.gov/groups/ST/toolkit /BCM/documents/proposedmodes/bps/bps-spec. pdf [retrieved on 2016-06-27] * figure 1 * | 1-7 | |
| X | GERHARD DE KONING GANS ET AL: "Best Effort and Practice Activation Codes", 29 August 2011 (2011-08-29), TRUST, PRIVACY AND SECURITY IN DIGITAL BUSINESS, SPRINGER BERLIN HEIDELBERG, BERLIN, HEIDELBERG, PAGE(S) 98 - 112, XP019162345, ISBN: 978-3-642-22889-6 * algorithm 1 * | 1-7 | TECHNICAL FIELDS SEARCHED (IPC) |

The present search report has been drawn up for all claims

| Place of search | Date of completion of the search | Examiner |
|---|---|---|
| Munich | 27 June 2016 | Prins, Leendert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICHAEL LUBY ; CHARLES RACKOFF.** How to Construct Pseudorandom Permutations from Pseudorandom Functions. *SIAM Journal on Computing,* 1988, vol. 17 (2), 373-386

- **ANDREW RUKHIN ; JUAN SOTO ; JAMES NECHVATAL ; MILES SMID ; ELAINE BARKER ; STEFAN LEIGH ; MARK LEVENSON ; MARK VANGEL ; DAVID BANKS ; ALAN HECKERT.** A Statistical Test Suite for Random and Pseudorandom Number Generators for Cryptographic Applications. *U.S. Department of Commerce / National Institute of Standards and Technology,* 2010, http://cs-rc.nist.gov/groups/ST/toolkit/rng/documents/SP800-22rev1a.pdf